(19) Europäisches Patentamt
European Patent Office
Office européen des brevets

(11) **EP 1 424 797 A1**

## (12) EUROPEAN PATENT APPLICATION
published in accordance with Art. 158(3) EPC

(43) Date of publication:
**02.06.2004 Bulletin 2004/23**

(21) Application number: **01961361.1**

(22) Date of filing: **04.09.2001**

(51) Int Cl.⁷: **H04J 13/04**

(86) International application number:
**PCT/JP2001/007661**

(87) International publication number:
**WO 2003/024009 (20.03.2003 Gazette 2003/12)**

(84) Designated Contracting States:
**AT BE CH CY DE DK ES FI FR GB GR IE IT LI LU MC NL PT SE TR**

(71) Applicant: **MITSUBISHI DENKI KABUSHIKI KAISHA**
**Tokyo 100-8310 (JP)**

(72) Inventor: **KAKEHI, Yuji,**
**c/o MITSUBISHI DENKI KABUSHIKI**
**Chiyoda-ku, Tokyo 100-8310 (JP)**

(74) Representative: **Popp, Eugen, Dr. et al**
**MEISSNER, BOLTE & PARTNER**
**Postfach 86 06 24**
**81633 München (DE)**

## (54) RADIO MOBILE DEVICE

(57)     A matched filter (131) extracts incoming time of signals from a plurality of base stations by time division, based on a baseband signal output from a RF transmitter/receiver (102). A delay profile generation circuit (132) generates respective delay profiles based on the incoming time, and the generated delay profiles are stored into memories (141, ..., 14N) designated by a demultiplexer (133). An effective path detection circuit (135) detects an effective path based on the stored delay profiles.

FIG.1

## Description

Technical Field

The present invention relates to a radio mobile machine, and more particularly, to a path search circuit in a portable telephone operated by a code division multiple access system (hereinafter referred to as CDMA communication system).

Background Art

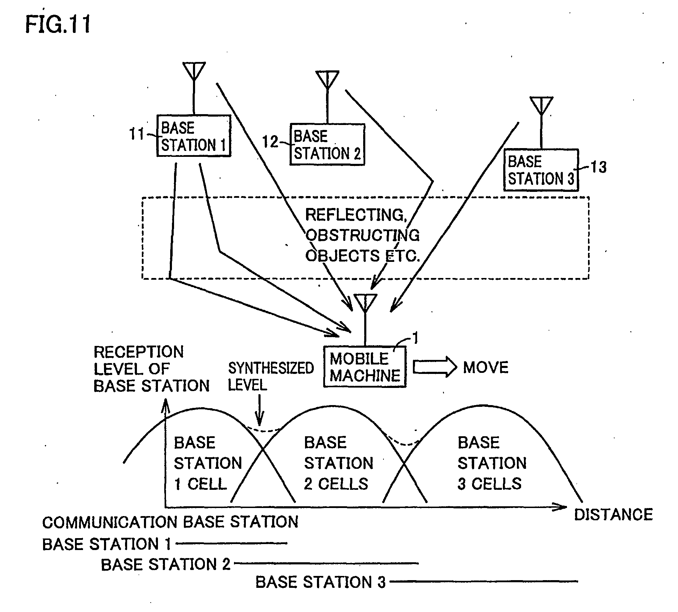

Fig. 11 schematically shows a CDMA communication system. In Fig. 11, base stations 11, 12 and 13 cover predetermined areas respectively, each area being referred to as a cell. When mobile machine 1 enters any one of the cells of the plurality of base stations 11, 12 and 13, it receives electric waves transmitted from a corresponding base station and sends electric waves to the base station. There are reflecting or obstructing objects such as buildings between mobile machine 1 and base stations 11, 12 and 13, so that not only straight electric waves but also reflected or diffracted waves are present between mobile machine 1 and base stations 11, 12 and 13. This produces a plurality of electric wave propagation paths (multipath). A receiving portion of mobile machine 1 receives synthesized electric waves that have passed through the multipath.

In mobile communication, the concept of handover is used in that a base station for communication is switched from one to another in accordance with a reception level of a base station in a mobile machine. That is, in a portable telephone, the cell of one base station cannot cover all communication areas, and a station for communication is switched from, for example, base station 11 to base stations 12 and 13 as mobile machine 1 moves. Here, as shown in Fig. 11, the reception level of each cell received by mobile machine 1 varies, providing an area that can receive only a signal from base station 11, an area that can receive only a signal from base station 12 and an area that can receive signals from both base stations 11 and 12 in accordance with movement of mobile machine 1. An area with the cells of both base stations 11 and 12 overlapped with each other is referred to as a handover area.

In the CDMA system, a technique called soft handover, in which electric waves are received from a plurality of base stations and synthesized, is used to perform control so as to prevent instantaneous interruption. The control is performed by a path search circuit and a finger/combiner circuit.

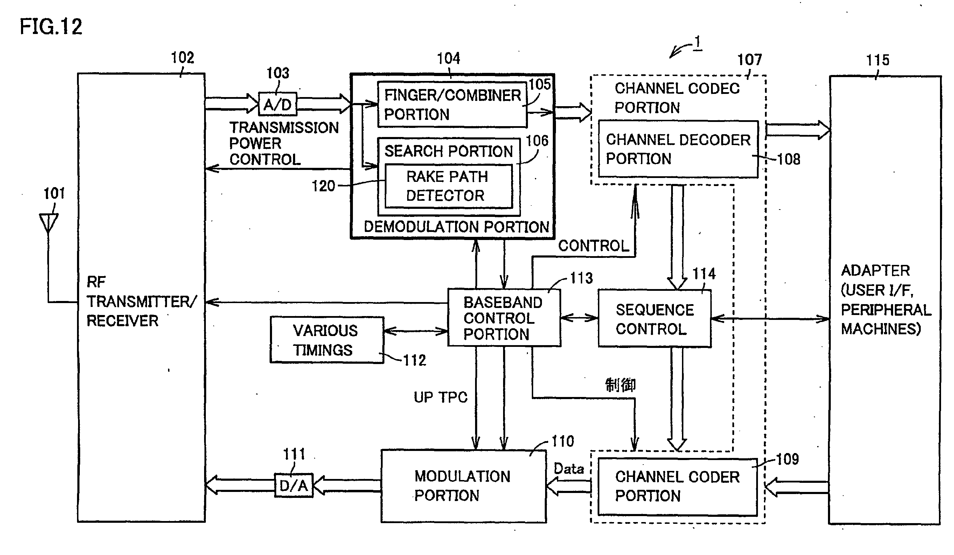

Fig. 12 is a block diagram showing the entire configuration of the mobile machine operated by the CDMA system. In Fig. 12, a RF transmitter/receiver 102 converts a high-frequency signal received at an antenna 101 into a signal with a baseband bandwidth by filtering or down-converting, and pulls up a baseband signal output from a modulation portion 110 to a high-frequency signal by up-converting to transmit the signal from antenna 101.

A baseband reception signal output from RF transmitter/receiver 102 is converted into a digital signal by an A/D converter 103 and is applied to a demodulation portion 104. Demodulation portion 104 includes a finger/combiner portion 105 and a search portion 106, detecting a desired signal timing from the reception signal and obtaining symbol data by inverse diffusion and in-phase synthesis (RAKE synthesis) to output the data to a channel codec portion 107. Search portion 106 includes a RAKE path detector 120 which will be described later. Channel codec portion 107 includes a channel decoder portion 108 and a channel coder portion 109 that perform error correction and error detection from the received symbol to estimate original data.

Channel coder portion 109 performs redundant encoding on transmission information in order to enhance error resistance and outputs a transmission symbol to modulation portion 110. Modulation portion 110 performs primary modulation (data modulation) and secondary modulation (diffusion modulation) on the transmission symbol, and provides filtering to prevent interference among codes. A transmission baseband signal modulated at modulation portion 110 is converted into an analog signal by a D/A converter 111 and applied to RF transmitter/receiver 102.

A timing signal generation circuit 112 generates various timing signals. A baseband control portion 113 performs timing control on demodulation portion 104, modulation portion 110 and channel codec portion 107 in accordance with a timing signal from timing signal generation circuit 112. Sequence control portion 114 performs control on communication with a base station. Adapter 115 establishes connection to a user interface such as voice communication or key operation and to peripheral devices (such as a personal computer).

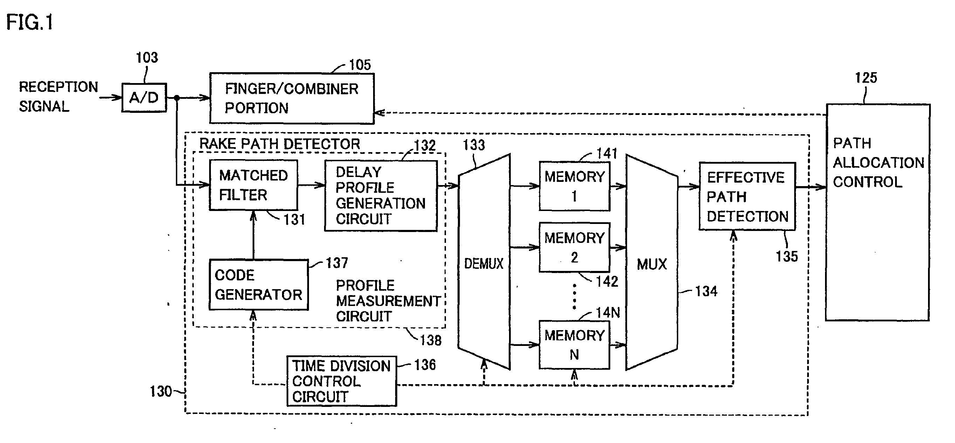

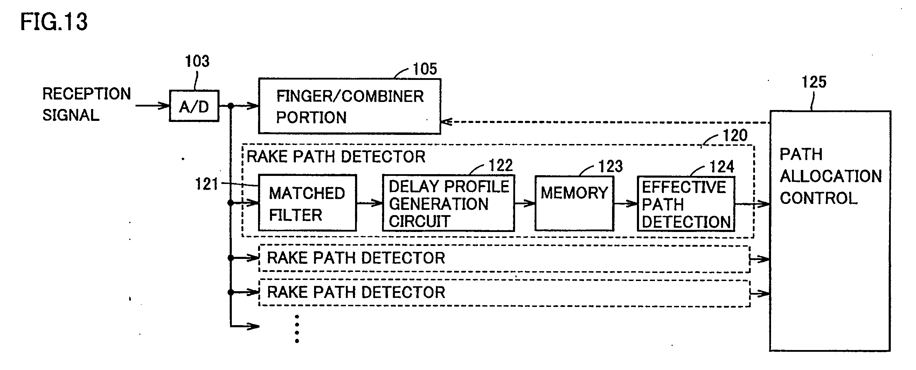

Fig. 13 is a block diagram showing an example of the RAKE path detector shown in Fig. 12, which is described in Japanese Patent Laying-Open No. 11-225093. A plurality of RAKE path detectors 120 are provided in order to observe delay profiles from digitized reception signals and to detect effective paths simultaneously for a plurality of channels or base stations. RAKE path detector 120 observes electric waves from a plurality of base stations 11, 12 and 13 shown in Fig. 1 and observes an effective path to utilize it in soft handover. Each of RAKE path detectors 120 includes a matched filter 121, a delay profile generation circuit 122, a memory 123 and an effective path detection circuit 124.

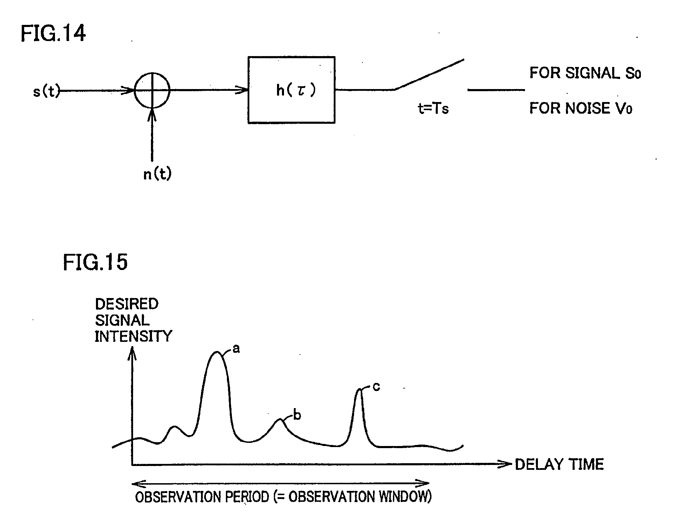

Matched filter 121 is designed such that an impulse response of $h(\tau)$ is obtained if noise $n(t)$ is applied to a signal $s(t)$ as shown in Fig. 14, and that a signal-to-noise ratio at the output of time Ts of the filter becomes maximum if $r(t) = s(t) + n(t)$ is input. Here, it is known that

$$h(\tau) = \lambda s^*(Ts - \tau)$$

(wherein $\lambda$ is an arbitrary constant and * is a complex conjugate)

is obtained if noise n(t) is white. The filter having such an impulse response is called a matched filter for signal s(t). Use of such a matched filter allows accurate incoming time of electric waves to be obtained.

Fig. 15 illustrates a delay profile. As shown in Fig. 11, when there are a plurality of propagation paths (multiple paths) between base stations 11, 12 and 13 and mobile machine 1, propagation time is different for each of the propagation paths. Signals that have passed through such multiple paths are observed by the matched filter to find a plurality of peaks during an observation period in accordance with delay time.

The characteristic showing the intensity of a desired signal with respect to delay time as shown in Fig. 15 is called the delay profile. In mobile unit communication, the delay profile is affected usually by fading and shadowing and varies dynamically. The first strong peak "a" in Fig. 15 shows a timing at which a strong electric wave arrives, the next weak peak "b" showing arrival of a weak electric wave with a delay, the next peak "c" showing arrival of an electric wave with a further delay.

Matched filter 121 in RAKE path detector 120 observes the intensity of an electric wave with respect to delay dime shown in Fig. 15. Delay profile generation circuit 122 converts an output of matched filter 121 into a delay profile to be stored into memory 123. Effective path detection circuit 124 detects an effective path from the delay profile stored in the memory. A path allocation control circuit 125 allocates timing for the path detected by effective path detection circuit 124 to finger/combiner portion 105 as the timing of arrival of an electric wave. Likewise, other RAKE detectors observe delay profiles of the other base stations to detect effective paths.

Thus, RAKE path detector 120 must be provided in correspondence to each base station. That is, observation of the delay profiles of N base stations would require N matched filters. However, the matched filter has a large circuit scale and hence has a limited number of base stations to be observed. Increase of the base stations to be observed would disadvantageously increase the circuit scale, complexity in configuration and the number of components.

Disclosure of the Invention

A main object of the present invention is, therefore, to provide a radio mobile machine capable of having an increased number of base stations that can be observed at once without increase in a circuit scale.

In the present invention, a reception portion receives a high-frequency signal from a base station and outputs a baseband signal. A profile measurement portion measures a delay profile of the signal from the base station based on the baseband signal. A control portion controls the delay profile measurement portion such that delay profiles for respective signals from a plurality of base stations by time division. A path detection portion detects an effective path to the base station based on the measured delay profiles.

Thus, according to the present invention, the delay profiles for the signals from the plurality of base stations are measured by time division, to measure the delay profiles of the plurality of base stations at once without increase in the circuit scale.

More preferably, the control portion can vary the number of time divisions and respective operating time periods.

Moreover, the profile measurement portion includes a matched filter observing an intensity of a signal with respect to delay time based on the baseband signal, and a delay profile generation circuit generating a delay profiles based on the intensity of the signal with respect to the delay time observed by the matched filter.

Furthermore, M profile measurement portions are provided, and delay profiles of N (M<N) base stations are observed.

In addition, an averaging circuit averaging delay profiles by adding the measured delay profiles multiplied by a prescribed number smaller than 1 to a newly measured delay profile is further provided.

A memory storing the measured delay profiles is further provided. Contents of the memory are cleared, with a prescribed number of the averaging circuit set as 0.

Moreover, the control portion changes a measurement period and/or measurement timing at which a delay profile is measured based on a measured delay spread.

Brief Description of the Drawings

Fig. 1 is a block diagram of a RAKE path detector according to one embodiment of the present invention;
Fig. 2 illustrates a method of storing a delay profile into a memory;
Figs. 3A-3E are timing charts for illustrating operation in one embodiment of the present invention;
Fig. 4 is a flowchart for illustrating the operation for attaining reduced power consumption;
Fig. 5 is a block diagram showing another embodiment of the present invention;
Figs. 6A-6D are timing charts for illustrating operation in the embodiment shown in Fig. 5;
Fig. 7 is a block diagram showing a further embodiment of the present invention;
Fig. 8 is a timing chart for illustrating operation in a further embodiment of the present invention;
Fig. 9 illustrates a further embodiment of the present invention;
Figs. 10A-10C each shows the relation between a delay profile and a required observation period;
Fig. 11 schematically shows a CDMA communication system to which the invention is applied:
Fig. 12 is a block diagram showing the entire configuration of a mobile machine operated by the CDMA system;
Fig. 13 is a block diagram showing an example of a path detector shown in Fig. 12;
Fig. 14 illustrates operation of a matched filter; and
Fig. 15 illustrates a delay profile.

Best Modes for Carrying Out the Invention

Fig. 1 is a block diagram of a RAKE path detector according to one embodiment of the present invention. In Fig. 1, RAKE path detector 130 has a simplified configuration by providing a plurality of memories in RAKE path detector 120 shown in Fig. 13 and by controlling profile measurement circuit 138 by time division.

Thus, RAKE path detector 130 includes a profile measurement circuit 138 constituted by a matched filter 131, a delay profile generation circuit 132 and a code generator 137, a demultiplexer 133, memories 141, 142, ..., 14N, a multiplexer 134, an effective path detection circuit 135, and a time division control circuit 136.

Code generator 137 generates a code for searching each base station and applies the code to matched filter 131. Time division control circuit 136 switches back and forth between demultiplexer 133 and multiplexer 134 every time a profile of each base station is measured.

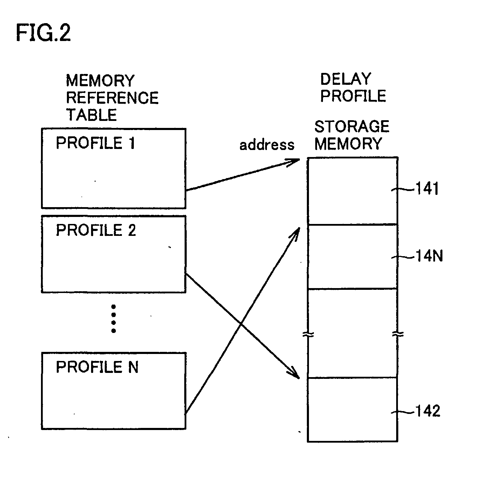

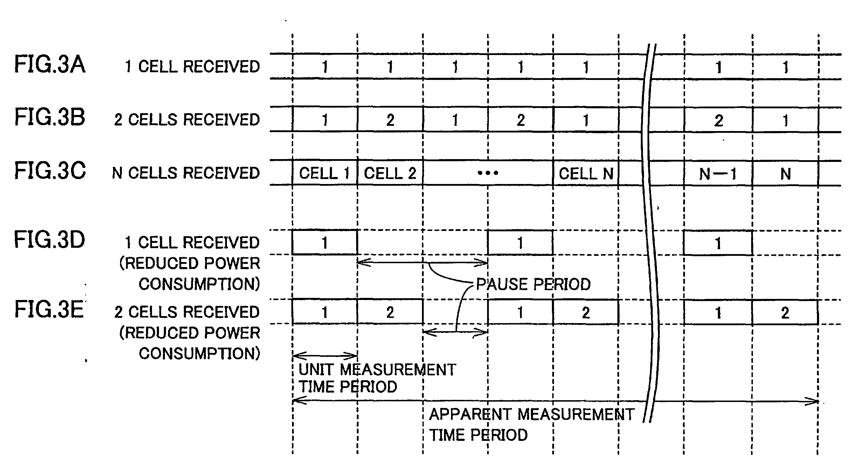

Fig. 2 illustrates a method of storing a delay profile into a memory, while Figs. 3A-3E are timing charts for illustrating operation in one embodiment of the present invention.

When a profile is measured only for base station 11, code generator 137 generates a code corresponding to the base station, matched filter 131 measuring only the profile of that base station as shown in Fig. 3A, time division control circuit 136 controlling demultiplexer 133 such that the delay profile generated at delay profile generation circuit 132 is stored into memory 141 and controlling multiplexer 134 such that the stored delay profile is provided to effective path detection circuit 135.

When the profiles of base stations 11 and 12 are measured, code generator 137 alternately generates respective codes for base stations 11 and 12. Matched filter 131 and delay profile generation circuit 132 alternately measure the delay profiles obtained based on the electric waves from base stations 11 and 12, as shown in Fig. 3B. Time division control circuit 136 controls demultiplexer 133 and multiplexer 134 by time division such that the delay profiles from base stations 11 and 12 are stored into memories 141 and 142 respectively and provided to effective path detector 135.

When the profiles of base stations 11, 12, ... 1N are measured, code generator 137 alternately generates respective codes for base stations 11, 12, ... 1N. Matched filter 131 and delay profile generation circuit 132 alternately measure by time division the delay profiles obtained based on the electric waves from base stations 11, 12, ... 1N as shown in Fig. 3C. Time division control circuit 136 controls demultiplexer 133 and multiplexer 134 by time division such that the delay profiles from base stations 11, 12, ... 1N are stored into memories 141, 142, ... 14N, respectively, and provided to effective path detector 135, as shown in Fig. 2.

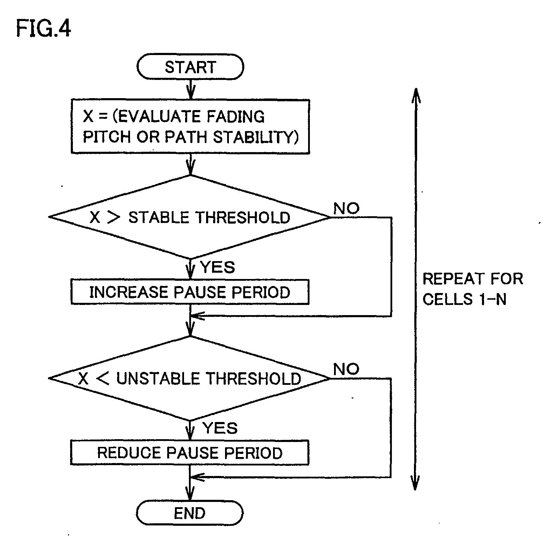

Fig. 4 is a flowchart illustrating operation for reducing power consumption. The embodiment shown in Fig. 4 evaluates a fading pitch and path stability, to increase a pause period if the evaluated value is higher than a stable threshold and to reduce the pause period if the evaluated value is lower than an unstable threshold. Thus, if the fading pitch is short, it is assumed that mobile machine 1 is moving fast, meaning that propagation environment tends to vary. Accordingly, the pause period is reduced whereas the measurement time is increased. On the contrary, if the fading pitch is very long, it is assumed that mobile machine 1 has a very low moving speed or is almost stationary. Here, the pause period is increased to optimize the operation rate, reducing power consumption.

More specifically, if the received electric wave is rather strong or if there is no change in the propagation environment, constant measurement of profiles is not required, and hence the delay profiles are measured for the period of a predetermined unit process time as shown in Fig. 3D. That is, in order to measure only the delay profile of base station 11 for the unit measurement time as shown in Fig. 3D, time division control circuit 136 causes code generator 137 to generate a code for base station 11 and to apply the code to matched filter 131. Demultiplexer 133 and multiplexer 134 is controlled by time division control circuit 136 by time division to operate memory 141 for the period of the unit measurement time for storing delay profiles and to provide the profiles to effective path detection circuit 135. After the unit measurement time has elapsed, the pause period comes. When a unit measurement time comes after the pause period, measurements of delay profiles are performed again. This can shorten actual measurement time compared to apparent measurement time, eliminating the need for operation of RAKE path detector 130 for that period of time, reducing power consumption.

Likewise, when the delay profiles for two base stations 11, 12 are emasured with low power consumption, the delay profile of base station 11 is measured for one unit measurement time period, and thereafter the delay profile of base station 12 is measured for one unit measurement time period, as shown in Fig. 3E. This is followed by a pause period, and after the pause period, the delay profile of base station 11 is measured again for one unit measurement time period.

Therefore, according to the present embodiment, a multiple number is made variable in time-division operation of profile measurement circuit 138 with respect to the number of cells for which delay profiles should be measured. If the number of cells to be measured is low or if delay profiles are stable, an operation stop period may be provided to lower the operation rate, reducing power consumption.

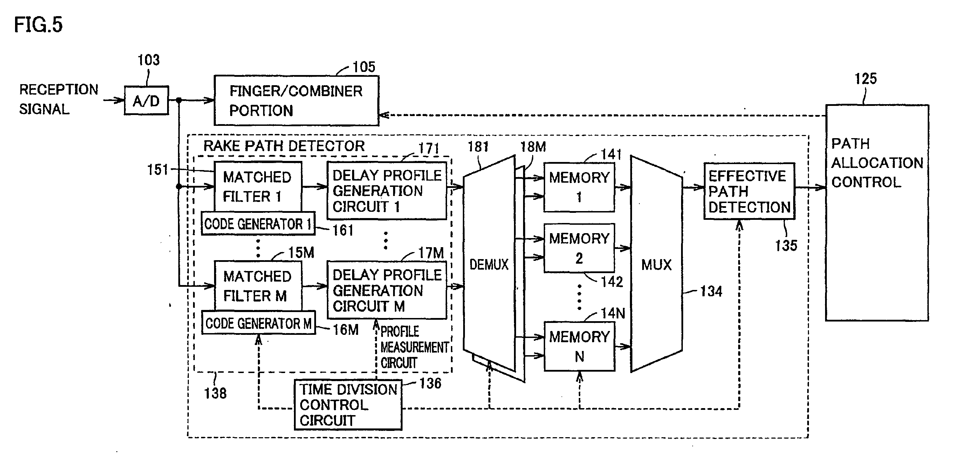

Fig. 5 is a block diagram showing another embodiment of the present invention. In the embodiment shown in Fig. 1, a plurality of delay profiles are measured by one matched filter 131. However, measurement time per cell decreases as the number of cells increases, possibly deteriorating performance. Delay profiles for six cells are to be measured according to the specification, so that the performance is lowered to one-sixth in time division control. Thus, in the embodiment shown in Fig. 5, in order to measure delay profiles for N cells (e.g. six cells), M (<N) (e.g. two) matched filters and N (six) storage memories for storing the delay profiles are used.

More specifically, M (two) each of matched filters 151, ..., 15M, code generators 161, ..., 16M, delay profile generation circuits 171, ..., 17M and demultiplexers 181, ..., 18M are provided, while the other components such as memories 141, 142, ... 14N, multiplexer 134, effective path detector 135 and time division control circuit 136 are configured as those in Fig. 1.

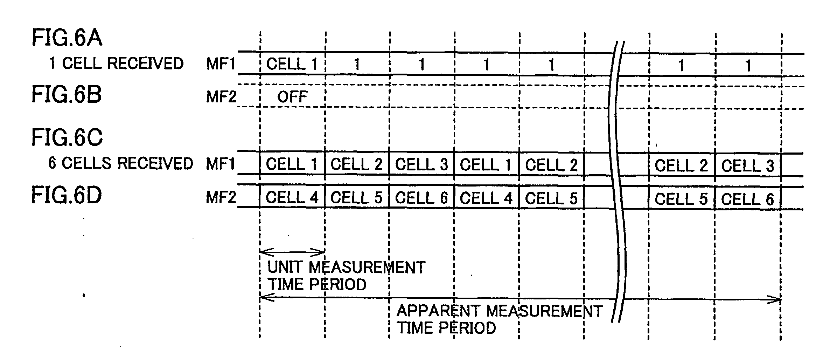

Figs. 6A to 6D are timing charts for illustrating the operation of the embodiment shown in Fig. 5. In Figs. 6A to 6D, when only cell 1 is received, time division control circuit 136 sets only matched filter 151, code generator 161 and multiplexer 181 in an operating state, while the other matched filters and the like are set in a non-operating state (off), as shown in Fig. 6B. As a result, the delay profile of cell 1 is constantly measured as shown in Fig. 6A.

When the delay profiles of N cells (e.g. six cells) are measured, matched filter 151 performs time division control such that the delay profiles of cells 1, 2 and 3 are sequentially measured, whereas matched filter 15M performs time division control such that the delay profiles of cells 4, 5 and 6 are sequentially measured.

Hence, according to the present embodiment, two matched filters 151 and 15M, for example, measure the delay profiles of six cells by time division control, only requiring two each of matched filters and delay profile generation circuits, allowing simplified configuration and reduced power consumption, though the performance is degraded to one-third compared to the case where a matched filter is provided for each cell.

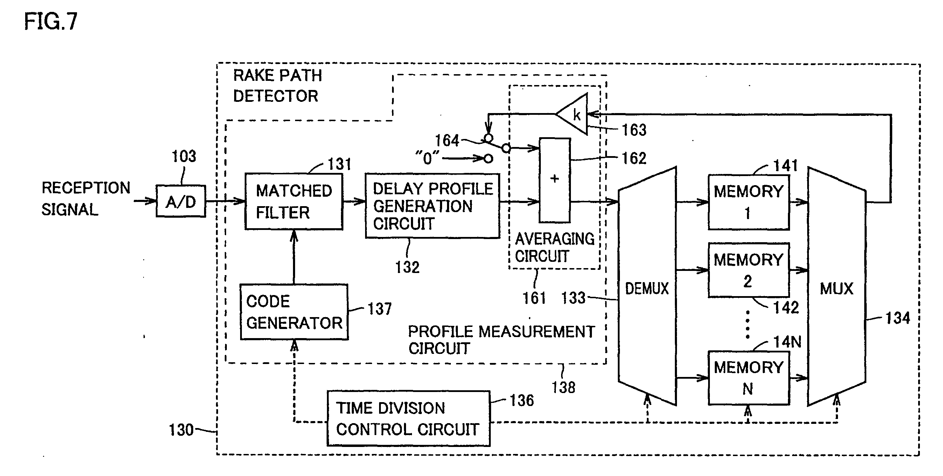

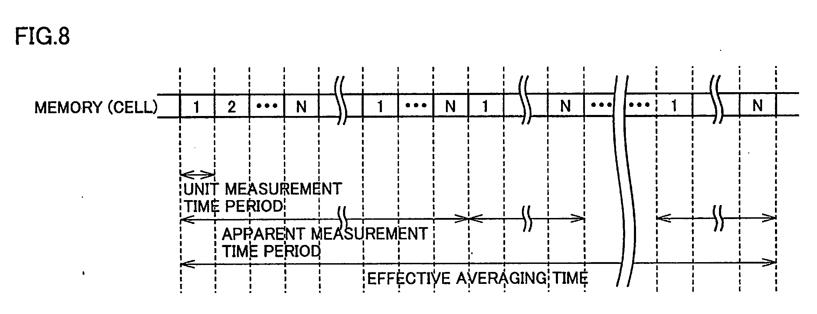

Fig. 7 is a block diagram showing a further embodiment of the present invention. Fig. 8 is a timing chart for illustrating the operation. The present embodiment is to add an averaging circuit 161 between the output of delay profile generation circuit 132 and demultiplexer 133 to the configuration of the embodiment shown in Fig. 1.

In general, a delay profile is ever changing due to a propagation environment such as fading. This causes variations with time in the strength or timing of a path. Because control for actually determining timing of demodulation is performed after observation of delay profiles, delay occurs in response time. Thus, a selected path is merely a result observed before actual use, and there is no guarantee that the path is optimal when allocated to a finger. In order to reduce an effect thereby, averaging circuit 161 is provided in the present embodiment. Ideally, a delay profile for e.g. 80 milliseconds is preferably measured and averaged, which however increases the memory capacity to a large extent and complicates the configuration.

In the present embodiment, therefore, a technique is employed in that a most-recently-measured delay profile multiplied by a forgetting factor smaller than "1" is added to a newly measured delay profile.

Thus, the delay profiles stored in memories 141, 142, ..., 14N are read by multiplexer 134 by time division and provided to averaging circuit 161. Averaging circuit 161 includes an adder 162 and a coefficient multiplier 163. Coefficient multiplier 163 multiplies the memory content output from multiplexer 134 by a forgetting factor smaller than "1" and applies the result to adder 162 via switch circuit 164. Adder 162 adds the profiles obtained so far that are weighted by a forgetting factor to a new delay profile corresponding to the cell for the read delay profile, to apply the addition result to demultiplexer 133.

As such, averaging circuit 161 is provided while the delay profiles stored in memories 141, 142, ... 14N are fed back to coefficient multiplier 163 and multiplied by a forgetting factor to add the resulting delay profiles to a newly measured delay profile. Thus, the adverse effect due to the delay in response time caused by control for actually determining timing of demodulation after observation can be reduced. Moreover, an S/N ratio can be improved by an averaged gain.

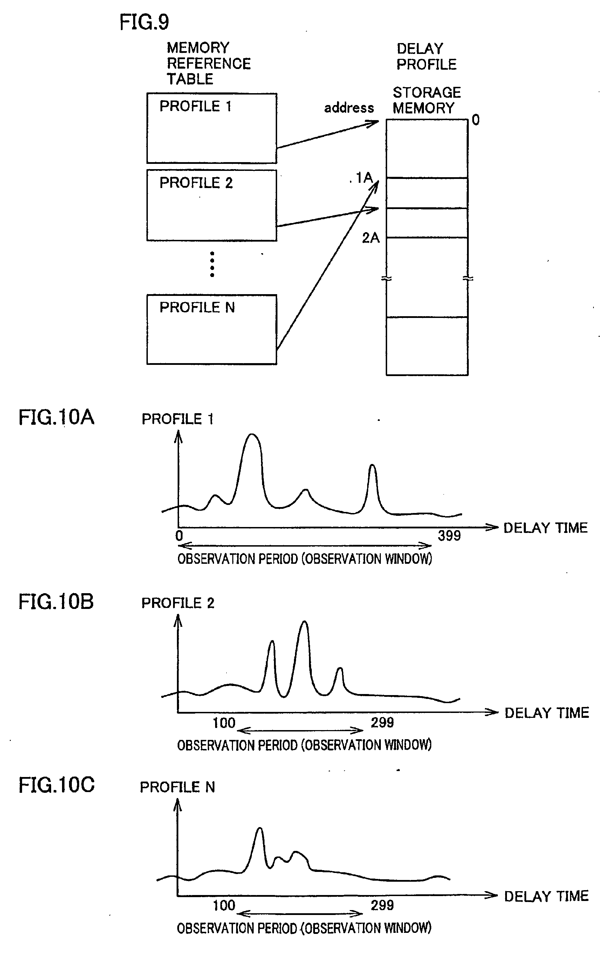

When a base station for communication via soft handover is switched or when a cell to be monitored by a peripheral cell monitor is switched, memories 141, 142, ..., 14N must be cleared in order to switch a cell to be observed. For instance, as shown in Fig. 9, if a profile 1 is written in addresses 0-1A and a profile 2 is written in addresses 1A-2A in the storage memory, and a profile N is further to be written into addresses 1A-2A, it is required to clear data in original profile 2. In general, clearing of a memory requires a dedicated circuit for writing 0 into each memory area, which increases not only time required but also power consumption.

Thus, a configuration is implemented in that the output of coefficient multiplier 163 shown in Fig. 7 is applied to one input of switch circuit 164, "0" is applied to the other input thereof, and the output of switch circuit 164 is applied to demultiplexer 133. When memories 141, 142, ... 14N are cleared, an input of switch circuit 164 is switched to the other side, and "0" is set as a forgetting factor for the period of unit observation time shown in Fig. 8. This allows new delay profiles to be written while clearing values remaining in the memories. That is, an effect similar to that of memory clearing can be obtained, eliminating the time required for memory clearing, and hence there is no increase in both circuit scale and power consumption.

Figs. 10A to 10C each shows an observation period of a delay profile.

If a delay profile is measured constantly by an observation period (observation window) having a maximum width as shown in Fig. 10A, the delay profile is measured in which no effective path appears, increasing power consumption and a memory region used.

Here, if the delay profile is observed only in a range where an effective path appears, the effective path can efficiently be measured. For instance, a delay spread (time difference between a path with a minimum delay and a path with a maximum delay) is measured that indicates the range (extent) where an effective path appears for an observation window, and if it is sufficiently small, the observation window may be made smaller accordingly and if necessary, the timing of the observation window may be shifted.

In the present embodiment, therefore, the size and timing of an observation window for observing a delay profile is made variable based on a delay spread. Thus, matched filter 131 is so configured that the unit width of the observation window determined by the hardware configuration of matched filter 131 is small. Profile measurement circuit 138 is then controlled by time division such that an observation window used for observation is designated to matched filter 131 per unit measurement time.

For instance, when matched filter 131 is configured to have a unit width of 100 chips, an observation window for delay profile generation circuit 132 is set large if the delay spread is large as shown in Fig. 10A, wherein sequential control is performed such that delay time of 0 to 199 chips are measured in the first unit measurement time period, and one delay profile from 0 to 399 chips is observed in four unit measurement time periods. Further, the observation window is set small if the delay spread is small as shown in Figs. 10B and 10C, wherein control is performed such that delay time of 100 to 199 chips are measured in the first unit measurement time period whereas 200 to 299 chips are measured in the next unit measurement time, and one delay profile from 100 to 299 chips is measured in two unit measurement time periods.

Moreover, when a plurality of cells are used for soft handover, similar control is performed to set small an observation window that is to be allocated to each cell, reducing the memory capacity storing a delay profile per cell. Here, signals of the same content are received from a plurality of base stations, allowing sufficient reception gain even though the observation window is made small, preventing increase in total size of the memory. On the contrary, when a signal of one cell is received, the observation window is set large, allowing control such that the reception gain is ensured.

Industrial Applicability

According to the present invention, a matched filter operated by time division for storing delay profiles of a plurality of base stations into a plurality of memories allows observation of the delay profiles of the plurality of base stations at once without increase in the circuit scale. This can be applicable to a radio mobile machine for radio communication such as a portable telephone.

**Claims**

1. A radio mobile machine, comprising:

   a receiving portion (102) receiving a high-frequency signal from a base station to output a baseband signal;
   a profile measurement portion (138) measuring a delay profile of a signal from said base station based on the baseband signal output from said receiving portion;
   a control portion (136) controlling said delay profile measurement portion such that a plurality of delay profiles for signals from respective base stations are measured by time division; and
   a path detection portion (135) detecting an effective path to said base station based on said measured delay profiles.

2. The radio mobile machine according to claim 1, wherein said control portion can vary the number of time divisions and respective operating time periods.

3. The radio mobile machine according to claim 1, wherein
   said profile measurement portion includes
   a matched filter (131, 151, ..., 15M) observing an intensity of a signal with respect to delay time based on said baseband signal, and
   a delay profile generation circuit (132, 171, ... 17M) generating said delay profile based on the intensity of the signal with respect to the delay time observed by said matched filter.

4. The radio mobile machine according to claim 1, wherein
   M said profile measurement portions are provided, and
   delay profiles of N (M<N) base stations are observed.

**5.** The radio mobile machine according to claim 1, further comprising an averaging circuit (161) averaging delay profiles by adding the measured delay profile multiplied by a prescribed number smaller than 1 to a newly measured delay profile.

**6.** The radio mobile machine according to claim 5, further comprising a memory (141, ..., 14N) storing the measured delay profile,
contents of said memory being cleared, with a prescribed number of said averaging circuit set as 0.

**7.** The radio mobile machine according to claim 1, wherein said control portion changes a measurement period and/or measurement timing at which a delay profile is measured based on a measured delay spread.

**8.** A radio mobile machine, comprising:

a receiving portion (102) receiving a high-frequency signal from a base station to output a baseband signal;
a profile measurement portion (138) measuring a delay profile of a signal from said base station based on the baseband signal output from said reception portion;
a control portion (136) controlling said delay profile measurement portion such that a delay profile of a signal from one base station is intermittently measured by time division; and
a path detection portion (135) detecting an effective path to said base station based on said measured delay profile.

**9.** The radio mobile machine according to claim 8, wherein said control portion can vary the number of time divisions and respective operating time periods.

**10.** The radio mobile machine according to claim 8, wherein
said profile measurement portion includes
a matched filter (131, 151, ..., 15M) observing an intensity of a signal with respect to delay time based on said baseband signal, and
a delay profile generation circuit (132, 171, ..., 17M) generating said delay profile, based on the intensity of the signal with respect to the delay time observed by said matched filter.

**11.** The radio mobile machine according to claim 8, wherein
M said profile measurement portions are provided, and
delay profiles of (M<N) base stations are observed.

**12.** The radio mobile machine according to claim 8, further comprising an averaging circuit (161) averaging delay profiles by adding the measured delay profile multiplied by a prescribed number smaller than 1 to a newly measured delay profile.

**13.** The radio mobile machine according to claim 12, further comprising a memory (141, ..., 14N) storing the measured delay profile,
contents of said memory being cleared, with a prescribed number of said averaging circuit set as 0.

**14.** The radio mobile machine according to claim 8, wherein said control portion changes a measurement period and/or measurement timing at which a delay profile is measured based on a measured delay spread.

FIG.1

RECEPTION SIGNAL → A/D `103` → FINGER/COMBINER PORTION `105`

PATH ALLOCATION CONTROL `125`

RAKE PATH DETECTOR

MATCHED FILTER `131` → DELAY PROFILE GENERATION CIRCUIT `132`

CODE GENERATOR `137`

PROFILE MEASUREMENT CIRCUIT `138`

DEMUX `133`

MEMORY 1 `141`
MEMORY 2 `142`
MEMORY N `14N`

MUX `134`

EFFECTIVE PATH DETECTION `135`

TIME DIVISION CONTROL CIRCUIT `136`

`130`

EP 1 424 797 A1

# FIG.2

MEMORY
REFERENCE
TABLE

DELAY
PROFILE

| PROFILE 1 | address | STORAGE
MEMORY |

~141

| PROFILE 2 |

~14N

⋮

| PROFILE N |

~142

FIG.3A  1 CELL RECEIVED

| 1 | 1 | 1 | 1 | 1 | | 1 | 1 |

FIG.3B  2 CELLS RECEIVED

| 1 | 2 | 1 | 2 | 1 | | 2 | 1 |

FIG.3C  N CELLS RECEIVED

| CELL 1 | CELL 2 | ••• | CELL N | | N−1 | N |

FIG.3D  1 CELL RECEIVED
(REDUCED POWER
CONSUMPTION)

| 1 | | 1 | | 1 |

PAUSE PERIOD

FIG.3E  2 CELLS RECEIVED
(REDUCED POWER
CONSUMPTION)

| 1 | 2 | | 1 | 2 | | 1 | 2 |

UNIT MEASUREMENT
TIME PERIOD

APPARENT MEASUREMENT
TIME PERIOD

FIG.4

```
                    ┌─────────────┐
                    │    START    │
                    └─────────────┘
                           │
                           ▼
              ┌──────────────────────────┐
              │ X = (EVALUATE FADING     │
              │ PITCH OR PATH STABILITY) │
              └──────────────────────────┘
                           │
                           ▼
                     ╱─────────────╲              NO
                    ╱  X > STABLE    ╲───────────────────┐
                    ╲  THRESHOLD     ╱                    │
                     ╲─────────────╱                      │
                           │ YES                          │
                           ▼                              │
              ┌──────────────────────────┐               │
              │  INCREASE PAUSE PERIOD    │               │
              └──────────────────────────┘               │
                           │◄─────────────────────────────┘
                           ▼
                     ╱─────────────╲              NO
                    ╱ X < UNSTABLE   ╲───────────────────┐
                    ╲  THRESHOLD     ╱                    │
                     ╲─────────────╱                      │
                           │ YES                          │
                           ▼                              │
              ┌──────────────────────────┐               │
              │   REDUCE PAUSE PERIOD     │               │
              └──────────────────────────┘               │
                           │◄─────────────────────────────┘
                           ▼
                    ┌─────────────┐
                    │     END     │
                    └─────────────┘
```

REPEAT FOR CELLS 1-N

11

FIG.5

RECEPTION SIGNAL → | A/D | 103

| FINGER/COMBINER PORTION | 105

| PATH ALLOCATION CONTROL | 125

RAKE PATH DETECTOR

151 →| MATCHED FILTER 1 | → | DELAY PROFILE GENERATION CIRCUIT 1 | 171

| CODE GENERATOR 1 | 161

15M | MATCHED FILTER M | → | DELAY PROFILE GENERATION CIRCUIT M | 17M

| CODE GENERATOR M | 16M

PROFILE MEASUREMENT CIRCUIT

DEMUX 181 18M

| MEMORY 1 | 141

| MEMORY 2 | 142

| MEMORY N | 14N

MUX 134

| EFFECTIVE PATH DETECTION | 135

138 | TIME DIVISION CONTROL CIRCUIT | 136

EP 1 424 797 A1

12

EP 1 424 797 A1

**FIG.6A**

1 CELL RECEIVED  MF1

| CELL 1 | 1 | 1 | 1 | 1 | | 1 | 1 |
|--------|---|---|---|---|--|---|---|

**FIG.6B**  MF2

| OFF |
|-----|

**FIG.6C**

6 CELLS RECEIVED  MF1

| CELL 1 | CELL 2 | CELL 3 | CELL 1 | CELL 2 | | CELL 2 | CELL 3 |
|--------|--------|--------|--------|--------|--|--------|--------|

**FIG.6D**  MF2

| CELL 4 | CELL 5 | CELL 6 | CELL 4 | CELL 5 | | CELL 5 | CELL 6 |
|--------|--------|--------|--------|--------|--|--------|--------|

UNIT MEASUREMENT TIME PERIOD

APPARENT MEASUREMENT TIME PERIOD

# FIG.7

RAKE PATH
DETECTOR

RECEPTION
SIGNAL → A/D → 103

MATCHED
FILTER ～131

CODE
GENERATOR ～137

DELAY PROFILE
GENERATION
CIRCUIT

132

"0" → 164

k ～163

+ ～162

AVERAGING
CIRCUIT

161   133

DEMUX

MEMORY
1 ～141

MEMORY
2

142

MEMORY
N ～14N

MUX

134

PROFILE MEASUREMENT
CIRCUIT

138

130

TIME DIVISION
CONTROL CIRCUIT ～136

EP 1 424 797 A1

14

FIG.8

MEMORY (CELL) | 1 | 2 | ••• | N | 1 | ••• | N | 1 | N | ••• | ••• | 1 | N

UNIT MEASUREMENT TIME PERIOD

APPARENT MEASUREMENT TIME PERIOD

EFFECTIVE AVERAGING TIME

FIG.9

MEMORY
REFERENCE
TABLE

DELAY
PROFILE

STORAGE
MEMORY

PROFILE 1

address

0

PROFILE 2

1A

2A

⋮

PROFILE N

FIG.10A

PROFILE 1

0        399    DELAY TIME

OBSERVATION PERIOD (OBSERVATION WINDOW)

FIG.10B

PROFILE 2

100        299    DELAY TIME

OBSERVATION PERIOD (OBSERVATION WINDOW)

FIG.10C

PROFILE N

100        299    DELAY TIME

OBSERVATION PERIOD (OBSERVATION WINDOW)

16

FIG.11

FIG.12

## FIG.13

RECEPTION SIGNAL → A/D (103) → FINGER/COMBINER PORTION (105)

PATH ALLOCATION CONTROL (125)

RAKE PATH DETECTOR (120)

121 → MATCHED FILTER (121) → DELAY PROFILE GENERATION CIRCUIT (122) → MEMORY (123) → EFFECTIVE PATH DETECTION (124)

RAKE PATH DETECTOR

RAKE PATH DETECTOR

EP 1 424 797 A1

## FIG.14

## FIG.15

## INTERNATIONAL SEARCH REPORT

| | International application No. |
|---|---|
| | PCT/JP01/07661 |

**A. CLASSIFICATION OF SUBJECT MATTER**
Int.Cl⁷   H04J13/04

According to International Patent Classification (IPC) or to both national classification and IPC

**B. FIELDS SEARCHED**

Minimum documentation searched (classification system followed by classification symbols)
Int.Cl⁷   H04J13/00-13/06, H04B1/69-1/713

Documentation searched other than minimum documentation to the extent that such documents are included in the fields searched
Jitsuyo Shinan Koho        1926-1996    Toroku Jitsuyo Shinan Koho  1994-2001
Kokai Jitsuyo Shinan Koho  1971-2001    Jitsuyo Shinan Toroku Koho  1996-2001

Electronic data base consulted during the international search (name of data base and, where practicable, search terms used)
JOIS

**C. DOCUMENTS CONSIDERED TO BE RELEVANT**

| Category* | Citation of document, with indication, where appropriate, of the relevant passages | Relevant to claim No. |
|---|---|---|
| X | JP 2000-286768 A (Kokusai Electric Co., Ltd.), 13 October, 2000 (13.10.00), | 1,3 |
| Y | Full text; all drawings | 5-8,10,12-14 |
| A | (Family: none) | 2,4,9,11 |
| X | JP 2000-151558 A (Fujitsu, Limited), 30 May, 2000 (30.05.00), | 1,3 |
| Y | Full text; all drawings | 5-8,10,12-14 |
| A | (Family: none) | 2,4,9,11 |
| Y | JP 2000-278176 A (Sanyo Electric Co., Ltd.), 06 October, 2000 (06.10.00), Full text; all drawings (Family: none) | 5-6,8,10,12-14 |
| Y | JP 11-274982 A (Sony Corporation), 08 October, 1999 (08.10.99), Full text; all drawings & EP 945995 A2      & US 6275521 A | 7,14 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 29 November, 2001 (29.11.01) | 11 December, 2001 (11.12.01) |

| Name and mailing address of the ISA/ | Authorized officer |
|---|---|
| Japanese Patent Office | |
| Facsimile No. | Telephone No. |

Form PCT/ISA/210 (second sheet) (July 1992)